# EUROPEAN PATENT SPECIFICATION

(11) **EP 4 134 296 B1**
(45) Date of publication and mention of the grant of the patent: **05.03.2025**
(21) Application number: 22151802.0
(22) Date of filing: 17.01.2022
(51) Int. Cl.: B62J 6/02, B62J 6/20, F21S 41/33

(54) **BICYCLE REFLECTION CUP BASED ON SURFACE PATCH ARRAY AND SYSTEM FOR PRODUCING THE REFLECTION CUP**
FAHRRADREFLEXIONSSCHALE BASIEREND AUF EINER OBERFLÄCHEN-PATCH-ANORDNUNG UND SYSTEM ZUR HERSTELLUNG DER REFLEXIONSSCHALE
COUPELLE DE RÉFLEXION DE BICYCLETTE BASÉE SUR UN RÉSEAU DE PLAQUES DE SURFACE ET SYSTÈME DE PRODUCTION DE LA COUPELLE DE RÉFLEXION

(30) Priority: 24.07.2021 CN 202110840472
(43) Date of publication of application: 15.02.2023
(73) Proprietor: ShenZhen Hill Optical Technology Co., Ltd, 518100 Shenzhen Guangdong (CN)
(72) Inventor: YUE, Chong, Shenzhen, Guangdong, 518100 (CN)
(74) Representative: Dr. Gassner & Partner mbB

(56) References cited:
- WO-A2-2020/190027
- CN-A- 109 163 304
- DE-U1- 202011 052 348
- DE-U1- 202017 103 914

## Description

### TECHNICAL FIELD

The present application relates to a field of bicycle reflection cup, and in particular, relates to a bicycle reflection cup based on a surface patch array and a system for producing the reflection cup.

### BACKGROUND ART

Bicycles are regulated in only a few countries in the world, and Germany is the most thoroughly implemented country. Cut-off line and the uniform distribution of beam are two most difficult parts to design a bicycle light according to DIN standard.

The cut-off line according to DIN standard is that, the brightest spot (called HV) should reach > 10 Lux (Lux is the illuminance unit, i.e., the lumen value per 1 square meter) at the measuring point 10 meters away from the light source; the illuminance of the point 3.4° upwards from the light source (called point A) should < 2 Lux. The light intensity distribution of the brightest spot should reach 10000 W/m² when expressed by light intensity distribution; and the light intensity distribution of the point 3.4° upwards from the brightest spot should less than 0.1 W/m² with a difference of 10⁵ times.

The beam in DIN standard is evenly distributed, that is, a range of divergence angle from center to periphery around the brightest spot HV is defined, which is at the measuring point 10 meters away from the light source. There are strict requirements for the illuminance of 7 points (including point A) in this range: the illuminance is required to be > HV/2 Lux at the point 1.5° downwards from HV and 4° on the left and right of HV; the illuminance is required to be >1.5 Lux at the point 5° downwards from HV; and the illuminance is required to be > 1 Lux at the point 5° downwards from HV and 4° on the left and right of HV.

The above requirements of cut-off line and uniform beam distribution can be summarized into one point, that is, the accuracy requirements of riding light beam in DIN standard.

First difficulty in meeting the accuracy requirements of riding light beam in DIN standard is the contradiction between light speed accuracy and stray light. In the existing technology, a method of increasing the quantity of the reflecting plate surface patches is generally adopted to meet the beam accuracy requirements in DIN standard in seven points including A, B, C and D, since it is easier to control the accuracy of beam with more reflecting plate surface patches. However, with the increase of the reflecting plate surface patches, stray light at the physical junction between the surface patches is also increased. Too much stray light causes that the stray light appears above the cut-off line, which cannot meet the requirement in DIN standard that the illuminance at the point 3.4° upwards from the brightest spot (called point A) is < 2 Lux.

Second difficulty in meeting the accuracy requirements of riding light beam in DIN standard is: the position 10 meters away from the light source is with the highest brightness. Therefore, for a rider, it is required that the position 10 meters in the front is not only the brightest, but also has a wide and bright horizontal light band. However, the wider the horizontal light band is, the lower the brightness is. The quantity of the reflecting plate surface patches should be increased to widen the light band. However, the increased quantity of the reflecting plate surface patches may result in the increase of the stray light and further causes the appearance of stray light above the cut-off line, which cannot meet the requirement in DIN standard that the illuminance at the point 3.4° upwards from the brightest spot (called point A) is < 2 Lux.

Third difficulty in meeting the accuracy requirements of riding light beam in DIN standard is: for a rider, not only a wide and bright horizontal light band at the position 10 meters away is hoped, but also a long and bright strip light band from proximal end to distal end with more than 80% length effective area is hoped. However, the longer the light band is, the lower the brightness is. If the light band is long and wide, the quantity of the reflecting plate surface patches should be increased, and the increased quantity of the reflecting plate surface patches may result in the increase of the stray light and further causes the appearance of stray light above the cut-off line, which cannot meet the requirement in DIN standard that the illuminance at the point 3.4° upwards from the brightest spot (called point A) is < 2 Lux.

In conclusion, there is a contradiction between the quantity of reflecting plate surface patches and the appearance of stray light due to too large quantity in order to meet the beam accuracy requirement in DIN standard of seven points including A, B, C and D at the position 10 meters away or the rider's requirement of a wide and bright horizontal light band in the distal end and a long and bright strip light band in the proximal end. The existing technology cannot solve the contradiction. It reduces the stray light by reducing the quantity of the reflecting plate surface patches, which cannot meet the accuracy of light speed according to DIN standard, generates a piece of light instead of a wide and bright light band at the position 10 meters away, or generates a wide and bright light band in the distal end while a short and dark strip zone instead of a long and bright zone in the proximal end.

Document CN 109163304 B discloses a bicycle reflection cup according to the preamble of claim 1.

### SUMMARY

Directing to the deficiency of the existing technology, the present application provides a bicycle reflection cup based on surface patch array according to claim 1, and in an embodiment not covered by the claims, a system for producing the reflection cup, which is aimed to solve the problem that the existing technology cannot give consideration to three difficulties, which include that reducing the stray light by reducing the quantity of the reflecting plate surface patches cannot meet the accuracy of light speed according to DIN standard, generates a piece of light instead of a wide and bright light band at the position 10 meters away, and generates a wide and bright light band in the distal end while a short and dark strip zone instead of a long and bright zone in the proximal end.

### Advantages and effects of the present application:

The present application combines a technology of the 45 degrees included angle of the light source and the distance between the lamp bead and the reflecting plate, a technology of light superimposition in the transverse strip zone, a technology of light superimposition in the long strip zone, and a technology balancing the beam accuracy value and the quantity of reflecting plates making the stray light below point A, which are support and dependent on each other. Although the 45 degrees included angle of the light source and the distance from the lamp bead to the reflecting plate make the light absorption efficiency of the reflecting plate more than 86%, the light absorption efficiency cannot meet the illuminance requirements according to DIN standard without the light superimpositions of the horizontal and long strip zones. Although the light superimpositions of the horizontal and long strip zones are adopted, it may aggravate stray light effect due to excessive quantity of the superimposed surface patches. Six upper patches and six lower patches in the present application just meet the demands of the balance point. When the superimposed light in long strip zone meets the brightness requirement of the long strip zone but the light output angles of four groups of reflecting plate surface patches are not controlled within -5°, the brightness of the long strip zone is enhanced but the stray light appears above the point A, which does not meet the requirement in DIN standard that the illuminance of point A should < 2 Lux. Or when the light superimposition is adopted in the transverse strip zone, but the width of the brightest zone in the lower-middle surface patch used for light superimposition in the horizontal strip zone is not controlled within the range of lower 1.5°, left 4° and right 4°, the illuminance of three B points abutting and outside the range cannot meet the requirement of > HV/2. In conclusion, after the combination of various portions of the present application can reach a much better effect than before the combination.,

### BRIEF DESCRIPTION OF THE DRAWINGS

Fig. 1 is a perspective view of the backlight surface of the reflection cup in the present application;
Fig. 2 is a perspective view of the light emitting surface of the reflection cup in the present application;
Fig. 3 is a front view of the reflection cup in the present application;
Fig. 4 is another front view of the reflection cup in the present application;
Fig. 5 is a side view of the reflection cup in the present application;
Fig. 6 is a general effect diagram of the light intensity distribution of the reflection cup in the present application;
Fig. 7-1 shows the first group of reflecting plates of the reflection cup for emitting light towards the long strip zone in the present application;
Fig. 7-2 is the light intensity distribution diagram of the first group of reflecting plates of the reflection cup for emitting light towards the long strip zone in the present application;
Fig. 8-1 shows the second group of reflecting plates of the reflection cup for emitting light towards the long strip zone in the present application;
Fig. 8-2 is the light intensity distribution diagram of the second group of reflecting plates of the reflection cup for emitting light towards the long strip zone in the present application;
Fig. 9-1 shows the third group of reflecting plates of the reflection cup for emitting light towards the long strip zone in the present application;
Fig. 9-2 is the light intensity distribution diagram of the third group of reflecting plates of the reflection cup for emitting light towards the long strip zone in the present application;
Fig. 10-1 shows the fourth group of reflecting plates of the reflection cup for emitting light towards the long strip zone in the present application;
Fig. 10-2 is the light intensity distribution diagram of the fourth group of reflecting plates of the reflection cup for emitting light towards the long strip zone in the present application;
Fig. 11-1 shows the first group of reflecting plates of the reflection cup for emitting light towards the transverse strip zone in the present application;
Fig. 11-2 is the light intensity distribution diagram of the first group of reflecting plates of the reflection cup for emitting light towards the transverse strip zone in the present application;
Fig. 12-1 shows the second group of reflecting plates of the reflection cup for emitting light towards the transverse strip zone in the present application;
Fig. 12-2 is the light intensity distribution diagram of the second group of reflecting plates of the reflection cup for emitting light towards the transverse strip zone in the present application;
Fig. 13 is the ten-meter distance test data of the present application.
Fig.14 is the application effect diagram of the reflection cup in the present application.

List of reference signs: 1-1: upper-outer symmetric surface patch; 1-2: upper-inner symmetric surface patch; 1-3: lower-inner symmetric surface patch; 1-4: upper-middle symmetric surface patch; 2-1: lower-outer symmetric surface patch; 2-2: lower-middle symmetric surface patch.

### DETAILED DESCRIPTION

### Design principle of the present application

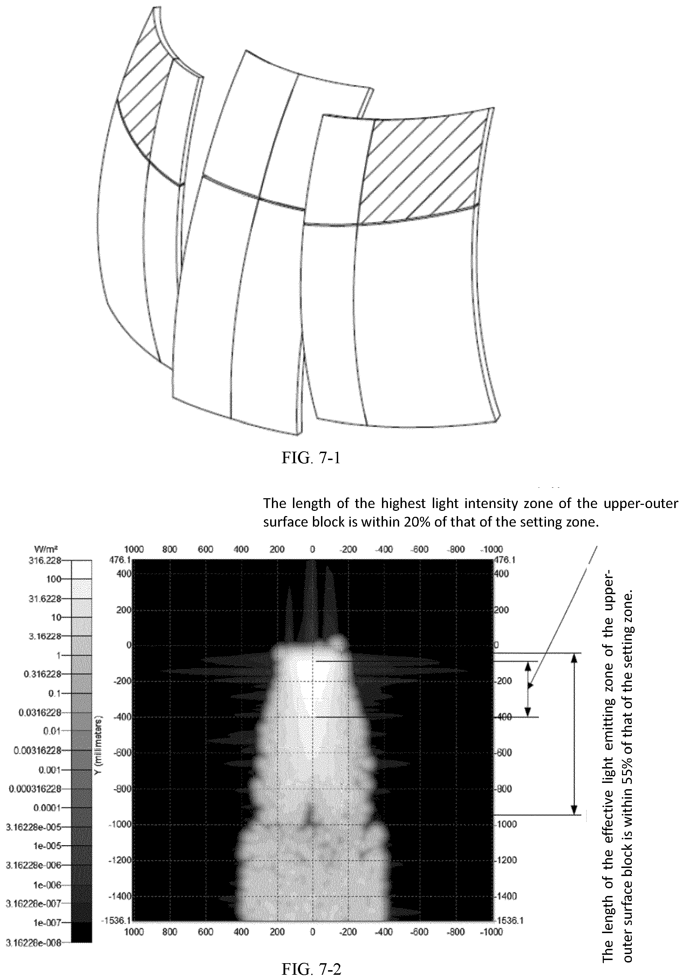

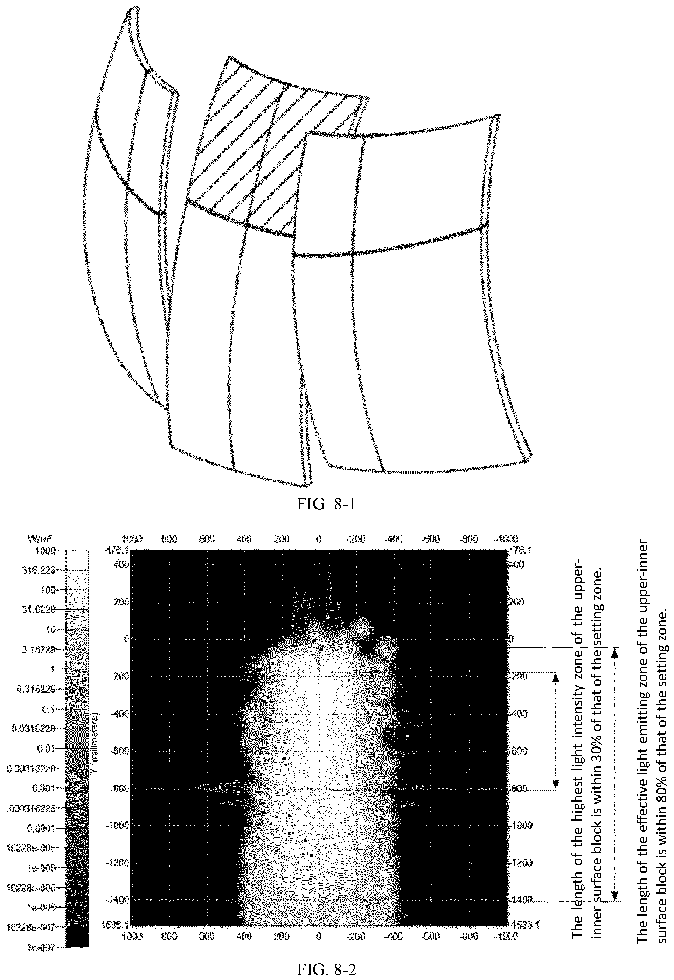

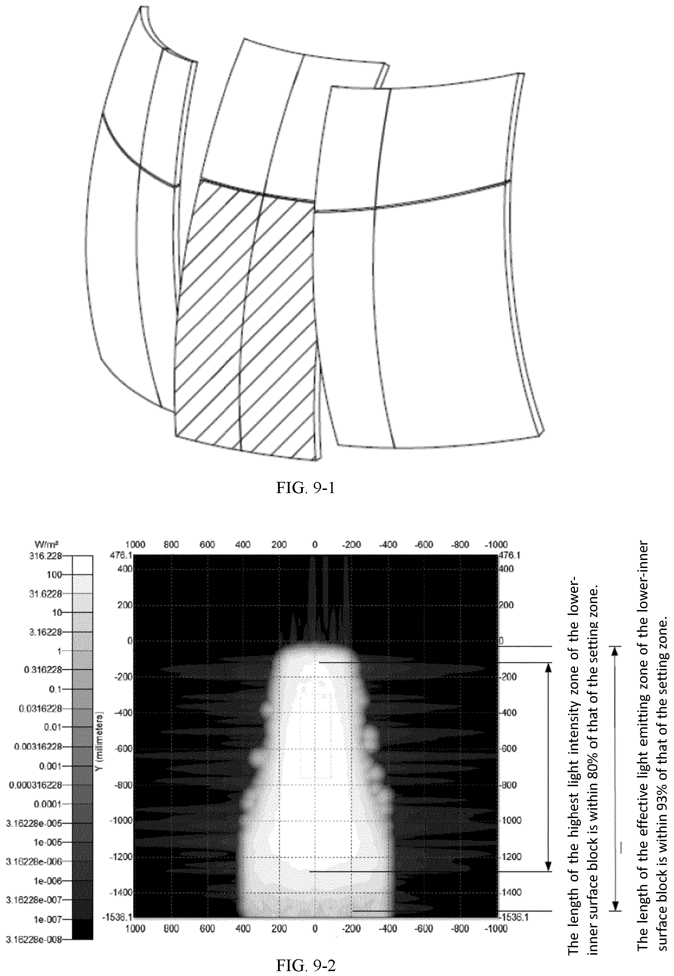

1. The quantity of the surface patches reaches the best balance point, which meets both requirements. In the present application, there are six upper surface patches and six lower surface patches, in which eight patches in four groups are allocated to a long strip zone and four patches in two groups are allocated to a transverse strip zone. The eight patches in four groups in long strop zone are used to superimpose and emit lights towards the long strip zone, in which the superimposed lights by the four groups realize the effective light emitting in more than 80% of the whole long strip zone. Because the lights are superimposed, the requirements on the illumination length and the illumination brightness for the long strip zone can be satisfied. The four patches in two groups are used to superimpose and emit lights from the outside to the inside towards the transverse strip zone. Because the lights are superimposed transversely, the requirements on width and brightness can be satisfied. Therefore, the patches are designed to have six upper patches and six lower patches, which is a basic and minimum quantity for satisfying the requirements on the wide and bright transverse strip zone and the long and bright long strip zone. As to stray light, although there is stray light at the physical junction between the upper six patches and the lower six patches, the stray light can be controlled to be under a point A by controlling the light emitting curvature of the surface patches. Although the stray light that enters the transverse strip zone under point A will enter an illuminance zone of six points including B, C and D under the point A, since the DIN standard regulates that three points B, two points D and one point C are all ≥ a limit value, the entry of stray light will not affect the zone of these six points.
2. The design principle of the transverse strip zone. First, the requirement on the illuminance of the three B points in the transverse strip zone > HV/2: the lower-outer symmetric surface patch is used to realize the width of the transverse strip zone, which is an area of - 300 mm to + 300 mm; the lower-middle symmetrical surface patch is used to realize a maximum brightness of the transverse strip zone. Because the illumination width and height of the lower-middle symmetrical surface patch exactly fall within the three B points of left 4°, right 4° and lower 1.5°, that is, the three B points in the transverse strip zone exactly fall outside the width of the illumination zone of the lower-middle symmetrical surface patch. Further, because the lower-outer symmetrical surface patch and the lower-inner symmetrical surface patch have the same illumination intensity of 3360-10000 W/m², the illuminance of the three B points satisfies the requirement of > HV / 2. Second, the design principle of the illumination intensity of the transverse strip zone: the area of the transverse strip zone is only about one tenth or less of the area of the whole setting zone, while the luminous area of the reflecting plate is one fourth of the luminous area of the whole reflection cup; a relatively large one fourth of the illumination is applied in such a relatively small area, such that the transverse strip zone can reach the maximum brightness in a setting zone of 3162.28-10000 W/m². Third, the maximum illuminance of the lower-outer symmetric surface patch is the same as that of the lower middle symmetric surface patch: the lower-outer symmetric surface patch should have an adequate width and the same brightness as the lower-middle symmetric surface patch; thus, the area of the lower-outer symmetric surface patch should be increased. In the present application, the width of the lower-outer symmetrical surface patch is 5.6mm and the width of the lower-middle symmetrical surface patch is 4mm, so as to realize the different illumination widths but the same illumination brightness.
3. The design principle of the long strip zone. The longer the illumination length of the reflecting plate is, the lower the brightness is. In order to ensure the illumination brightness of the whole long strip zone, four groups of reflecting plate surface patches are used to superimpose and emit lights. The different light emitting angles of reflecting plate surface patch causes the different illumination distances. Based on this principle, four groups of surface patches used in the long strip zone are arranged to emit lights in different angels so as to realize different illumination lengths in the long strip zone. In order to prevent the four groups of reflected stray lights from appearing above the point A, the light emitting angle shall be as low as possible: if the optical axis is perpendicular to the computer screen, a light emitting angle above the optical axis is positive and a light emitting angle below the optical axis is negative; the light emitting angle shall be as low as possible, that is, the light emitting angle shall be under 0°. In the present application, the initial value of the light emitting angle of the surface patch in the long strip zone is set to be less than 5°. In order to realize the superimposed light output in the long strip zone, the light emitting angles of the four groups of reflecting plate surface patches are configured to be different. The light emitting angle of the first group of upper-outer symmetrical surface patches is -2°- -45°, and the illumination length of the highest brightness zone is 20% of the long strip zone, as shown in Fig.7-2. The light output angle of the second group of upper-inner symmetrical surface patches is -8.5°- -65°, and the illumination length of the highest brightness zone is within 30% of the long strip zone, as shown in Fig.8-2. The light output angle of the lower-inner symmetric surface patches of the third group is-1.5°- -47°, and the illumination length of the highest brightness zone is within 80% of the long strip zone, as shown in Fig.9-2. The superimposed light emitting of the three groups enables the effective illumination length of the upper area to reach 80%, and enables the length of the highest brightness zone to reach 60%. The light emitting angle of the upper-middle symmetrical surface patch in the fourth group is -2.5°--45°, and the maximum brightness length thereof does not increase, which is within 35% of the long strip zone. The fourth group of surface patches is used to compensate the brightness of the proximal end.
4. The design principle of a system for producing the bicycle reflection cup will be described below. The curvature of the reflection cup is obtained by a third-party surface calculation software. The expected light emitting positions of each group of surface patches are set by a surface patch light emitting position initial value setting module of the system. Since there is an error between the light emitting position of each group of surface patches calculated by the third-party surface calculation software and the actual position, an error calculation module of the surface calculation software of the system calculates the error between the expected position and the actual position, and then the parameters inputting to the third-party surface calculation software is adjusted by an error correction module of the surface calculation software.

Based on the above principles, the present application provides a bicycle reflection cup based on surface patch array.

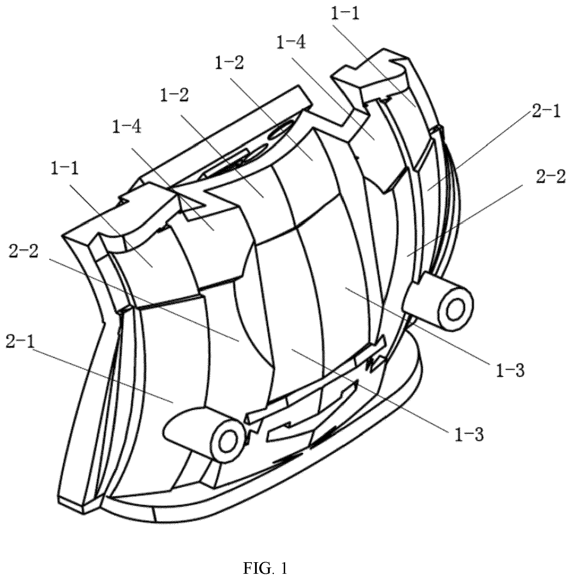

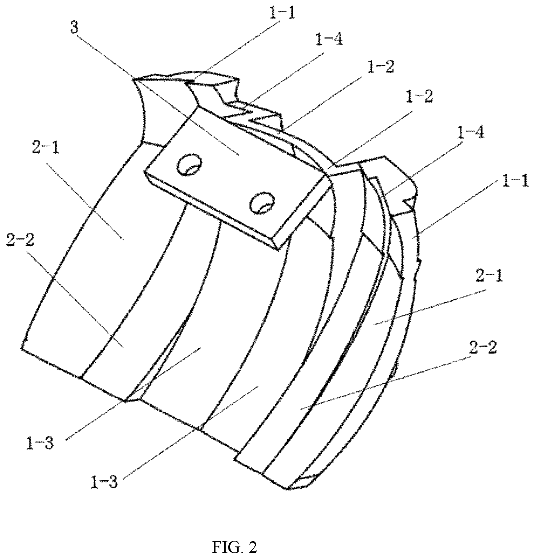

A bicycle reflection cup based on surface patch array as shown in Figs.1 and 2 includes six upper surface patches, six lower surface patches, and a LED light and a light base that are fixed on a side of a light emitting surface of the six surface patches; the six upper surface patches are divided into three pairs that are symmetrically arranged on both sides of an axis; the six lower surface patches are divided into three pairs that are symmetrically arranged on both sides of the axis; the six upper surface patches are arranged in a sequence from the middle to both sides: upper-inner symmetric surface patches, upper-middle symmetric surface patches, upper-outer symmetric surface patches; and the six lower surface patches are arranged in a sequence from the middle to both sides: lower inner symmetric surface patches, lower middle symmetric surface patches, and lower outer symmetric surface patches, characterized in that:
the upper-inner symmetric surface patches, the upper-middle symmetric surface patches, the upper-outer symmetric surface patches and the lower-inner symmetric surface patches form a surface patch array that superimposes lights to a long strip zone of a setting zone; the lower-outer symmetric surface patches and the lower-middle symmetric surface patches form a surface patch array that superimposes and fills lights to a transverse strip zone at a distal end of the setting zone; light emitting areas of the surface patch array for superimposing lights to the long strip zone of the setting zone and the surface patch array for superimposing and filling lights to the transverse strip zone at the distal end of the setting zone are determined according to requirements of a light intensity distribution in the distal end and proximal end of the setting zone; the LED light is arranged obliquely towards the light emitting surface of the six upper surface patches; the setting zone is a rectangular light band three-dimensional space with a set length and a set width, a height of which is set to be below a cut-off line; a height of the cut-off line is set as a height of a certain part of a human body according to a humanization standard; the long strip zone includes all zones from the proximal end to the transverse strip zone at the distal end with a height under the cut-off line and with excluding the transverse strip zone at the distal end of the setting zone.

The determining the light emitting areas of the surface patch arrays for superimposing lights to the long strip zone of the setting zone and the surface patch arrays for superimposing and filling lights to the transverse strip zone at the distal end of the setting zone according to requirements of a light intensity distribution in the distal end and proximal end of the setting zone including: when a light intensity of the transverse strip zone at the distal end of the setting zone is larger than that of the long strip zone at the proximal end of the setting zone, the light emitting area of the surface patch array for superimposing and filling lights to the transverse strip zone at the distal end of the setting zone is set to be larger than that of the surface patch array for superimposing the light to the long strip zone at the proximal end of the setting zone; when a light intensity of the transverse strip zone at the distal end of the setting zone is smaller than that of the long strip zone at the proximal end of the setting zone, the light emitting area of the surface patch array for superimposing and filling lights to the transverse strip zone at the distal end of the setting zone is set to be smaller than that of the surface patch array for superimposing the light to the long strip zone at the proximal end of the setting zone.

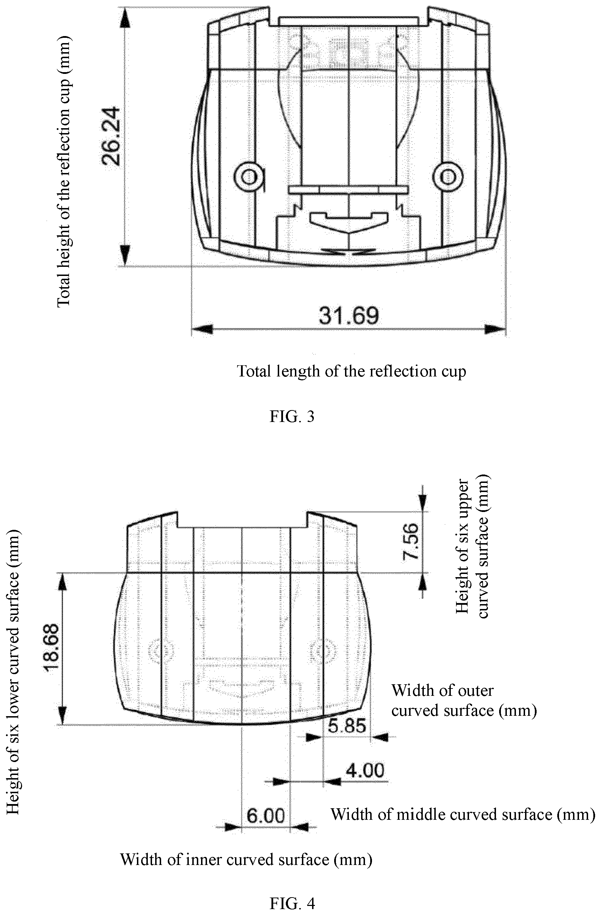

Referring to Figs.3 and 4, the light emitting area of the surface patch array for superimposing and filling lights to the transverse strip zone at the distal end of the setting zone is 44%, and the light emitting area of the surface patch array for superimposing lights to the long strip zone of the setting zone is 56%; or the light emitting area of the surface patch array for superimposing and filling lights to the transverse strip zone at the distal end of the setting zone is 56%, and the light emitting area of the surface patch array for superimposing lights to the long strip zone at the proximal end of the setting zone is 44%.

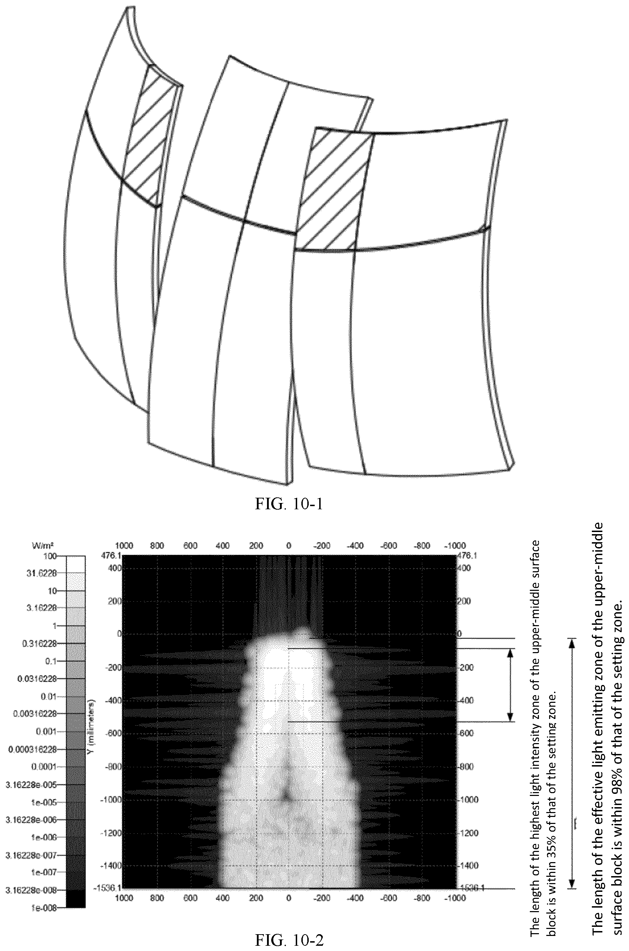

Referring to Figs. 7-1, 7-2, 8-1, 8-2, 9-1, 9-2, 10-1 and 10-2, the surface patch array for superimposing lights to the long strip zone of the setting zone includes four groups of surface patches, in which three groups are arranged in an upper row of the reflection cup and one group is arranged in a lower row and close to middle of the reflection cup, the four groups of surface patches superimpose and emit lights from the proximal end to the distal end in the long strip zone of the setting zone; a light emitting surface of the three groups of surface patches in the upper row is 239.57, an effective light emitting surface of which in the long strip zone is 52%; a light emitting surface of the one group of surface patches in a lower row and close to middle of the reflection cup is 224.16, an effective light emitting surface of which in the long strip zone is 48%. the four groups of surface patches includes:
referring to Fig.7-1 and Fig.7-2, a first group of upper-outer symmetric surface patches, an effective light emitting zone in the long strip zone thereof is a zone that has: a light emitting height under the cut-off line, a light emitting length within 55% of a total length of the setting zone extending forward from -2° to -45°; a highest light emitting zone in the long strip zone thereof is a zone that has: a light emitting height under the cut-off line, and a light emitting length within 20% of a total length of the setting zone extending forward from -2° to -45°;
referring to Figs. 8-1 and 8-2, a second group of upper-inner symmetric surface patches, an effective light emitting zone in the long strip zone thereof is a zone that has: a light emitting height under the cut-off line, a light emitting length within 80% of a total length of the setting zone extending forward from -8° to -65°; a highest light emitting zone in the long strip zone thereof is a zone that has: a light emitting height under the cut-off line, and a light emitting length within 30% of a total length of the setting zone extending forward from -8° to -65°;
a third group of lower-inner symmetric surface patches as shown in Fig.9-1 and Fig.9-2, an light emitting area thereof is 224.16 mm², which is 44% of a total light emitting area of the long strip zone, an effective light emitting zone in the long strip zone thereof is a zone that has: a light emitting height under the cut-off line, a light emitting length within 44% of a total length of the setting zone extending forward from -1.5° to -47°; a highest light emitting zone in a length direction thereof is a zone that has: a light emitting height under the cut-off line, and a light emitting length within 75% of a total length of the setting zone extending forward from -1.5° to -47°;
referring to Figs.10-1 and 10-2, a fourth group of upper-middle symmetric surface patches, an effective light emitting zone in a length direction thereof is a zone that has: a light emitting height under the cut-off line, a light emitting length within 98% of a total length of the setting zone extending forward from -2.5° to -45°; a highest light emitting zone in a length direction thereof is a zone that has: a light emitting height under the cut-off line, and a light emitting length within 35% of a total length of the setting zone extending forward from -2.5° to -45°.

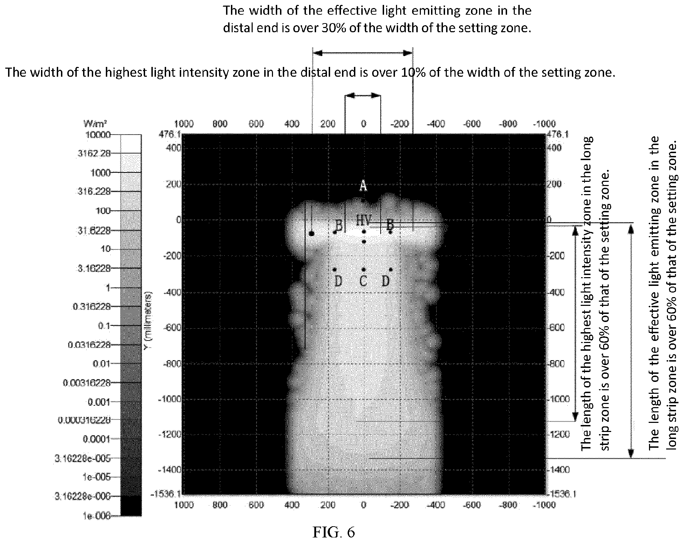

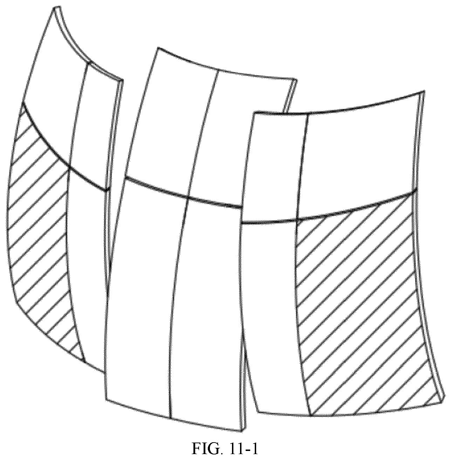

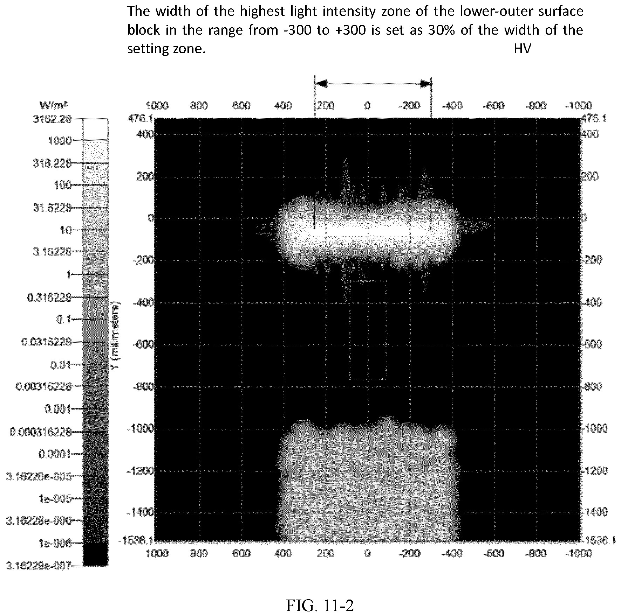

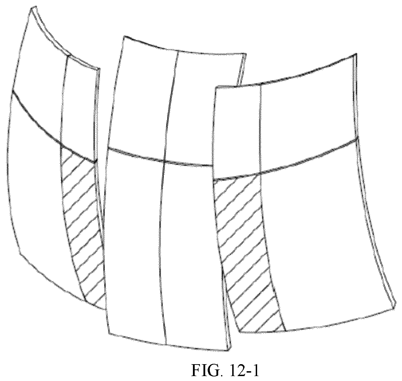

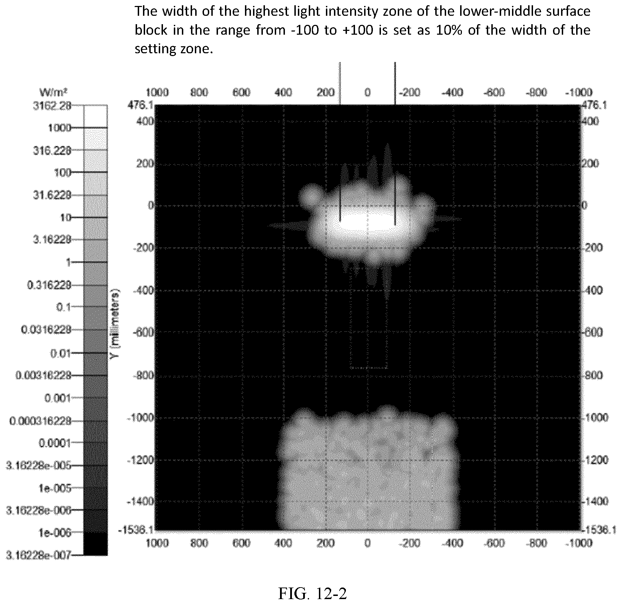

The surface patch array for superimposing and filling lights to the transverse strip zone of the setting zone includes two groups of surface patches, which superimpose and fills lights in the transverse strip zone at the distal end of the setting zone from outside to inside, the two groups of surface patches includes:
referring to Figs.11-1 and 11-2, a first group of lower-outer symmetric surface patches, which is used for a light emitting width and thickness of the transverse strip zone in the distal end; a light emitting area of the surface patches is 218.556, which is larger than one fourth of a total light emitting area of the reflection cup, and a light intensity distribution of a highest light intensity thereof is 1000-3162W/m2; a light emitting angle of the lower-outer symmetric surface patches is from 10° to -10°; an effective light emitting width of the lower-outer symmetric surface patches is within 40% of a width of the setting zone; a maximum light intensity width of the lower-outer symmetric surface patches is within 30% of a width of the setting zone;
referring to Figs. 12-1 and 12-2, a second group of lower-middle symmetric surface patches, which is used for superimposing lights to the transverse strip zone in the distal end; a light emitting area of the surface patches is 149.44, which is larger than one sixth of a total light emitting area of the reflection cup, and a light intensity distribution of a highest light intensity thereof is 1000-3162W/m2; a light emitting angle of the lower-outer symmetric surface patches is from 10° to -10°; an effective light emitting width of the lower-middle symmetric surface patches is within 20% of a width of the setting zone; a maximum light intensity width of the lower-middle symmetric surface patches is within 15% of a width of the setting zone;
light emitting heights of the above two groups are under the cut-off line.
a light emitting effect after superposition of the surface patch arrays for superimposing lights to the long strip zone of the setting zone and the surface patch arrays for superimposing and filling lights to the transverse strip zone in the distal end of the setting zone is shown in the Fig.6.

The light intensity distribution value of a highest light intensity area after the superimposition of the transverse strip zone is 3162.28-10000w/m²; an effective light emitting area of the transverse strip zone has: a light emitting height under the cut-off line, and a light emitting width within 30% of the setting zone; a highest light intensity area of the transverse strip zone has: a light emitting height under the cut-off line, and a light emitting width within 10% of the setting zone width.

The light intensity distribution value of a highest light intensity area after the superimposition of the long strip zone is 1000-3162.28 w/m²; an effective light emitting area of the long strip zone has: a light emitting height under the cut-off line, and a light emitting width within 80% of the setting zone; a highest light intensity area of the long strip zone has: a light emitting height under the cut-off line, and a light emitting width within 60% of the setting zone width.

The stray light zone generated at a physical junction of the six upper surface patches and the six lower surface patches is controlled to be under the cut-off line, and a stray light intensity distribution value thereof is controlled to be less than 0.01 W/m².

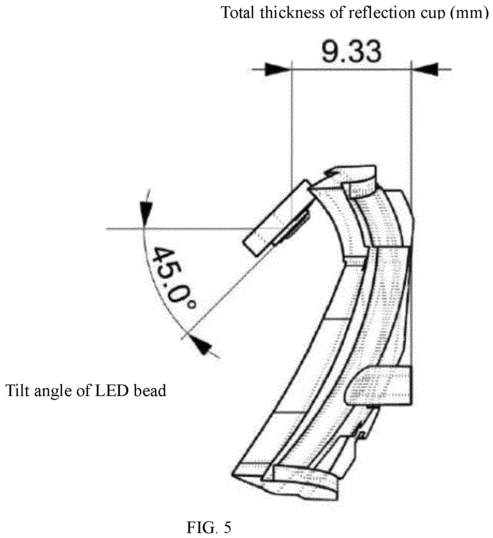

As shown in Fig.5, the light emitting surface of the LED light being arranged obliquely towards the six upper surface patches includes: a plane of the LED light base forms an included angle of 45 degrees with a horizontal plane, and a total thickness from the light bead to the reflection cup is 9.33mm; the 45 degrees included angle and the distance between the light bead and the reflection cup are used to ensure that a light absorption efficiency of the reflection cup is more than 86%.

A system for producing bicycle reflection cup includes a bicycle reflection cup based on surface patch array, a third-party surface calculation software, a surface patch light emitting position initial value setting module, a surface calculation software error calculation module, and a surface calculation software error correction module. The third-party surface calculation software, the surface patch light emitting position initial value setting module, the surface calculation software error calculation module and the surface calculation software error correction module are arranged in the computer. The initial value setting module of the light emitting position of the surface patch is used to set the initial value of the light emitting position of each pair of the surface patches, and the error calculation module of the surface calculation software is used to calculate the error between the light emitting position of the reflection cup calculated by the surface calculation software and the actual light emitting position. The surface calculation software error correction module is used to convert the error calculated by the third-party surface calculation software into compensation input parameters, and then input the compensation input parameters into the third-party surface calculation software to obtain ideal results.

The surface calculation software error calculation module includes the light emitting position error calculation module of six upper surface patches and six lower surface patches. The surface calculation software error calculation module includes the compensation input parameters inputting to the third-party surface calculation software when calculating the curvature of the six upper surface patches and six lower surface patches.

### Embodiment 1

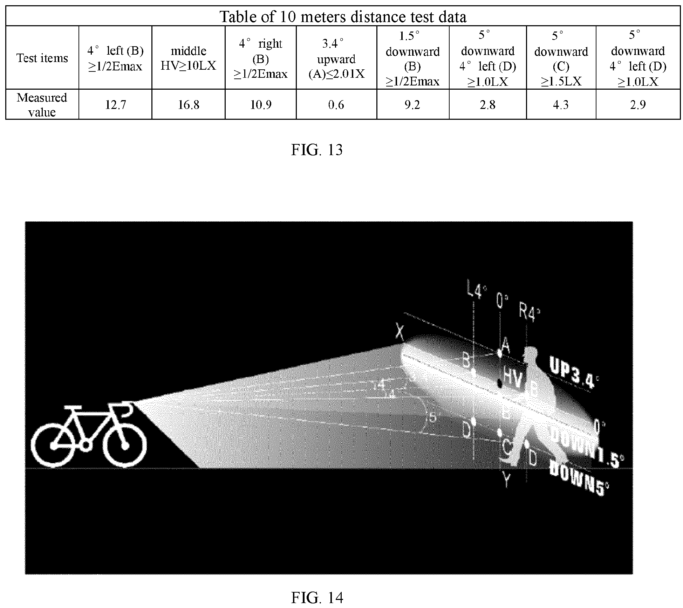

Fig. 13 shows the test data of the ten meters distance of the present application, which has better and superior effect compared with the DIN riding standard:
1. The DIN standard requires that the illuminance of the brightest point HV reaches 10 Lux, and the illuminance of the brightest point HV of the present application reaches 16.8 Lux, which far exceeds the illuminance requirement of 10 Lux in DIN standard.
2. The DIN standard requires that the illuminance of point 3.40° upwards is < 2 Lux, and the illuminance of point 3.40° upwards in the present application reaches 0.6 Lux, which far exceeds the illuminance requirement of < 2 Lux in DIN standard.
3. The DIN standard requires that the illuminance of point 4° downwards and 4° left and right is > HV/2 Lux, and the illuminance of point 4° downwards and 4° left and right in the present application far exceeds the illuminance requirement of > HV/2 Lux in DIN standard.
4. The DIN standard requires that the illuminance of point 5° downwards is ≥ 1.5 Lux, and the illuminance of point 5° in the present application far exceeds the illuminance requirement of ≥ 1.5 Lux in DIN standard.
5. The DIN standard requires that the illuminance of point 5° downwards and 4° on the left and right is > 1.0 Lux, and the illuminance of point 5° downwards and 4° left and right in the present application far exceeds the illuminance requirement of ≥ 1.0 Lux in DIN standard.

It should be emphasized that the embodiments of the present application are illustrative rather than restrictive, so the present application includes but is not limited to the embodiments described in the specific embodiments.

## Claims

1. A bicycle reflection cup based on surface patches, comprising: six upper surface patches, six lower surface patches, and a LED light and a light base that are fixed on a side of a light emitting surface of the six surface patches; the six upper surface patches are divided into three pairs that are symmetrically arranged on both sides of an axis; the six lower surface patches are divided into three pairs that are symmetrically arranged on both sides of the axis; the six upper surface patches are arranged in a sequence from the middle to both sides: upper-inner symmetric surface patches (1-2), upper-middle symmetric surface patches (1-4), upper-outer symmetric surface patches (1-1); and the six lower surface patches are arranged in a sequence from the middle to both sides: lower inner symmetric surface patches (1-3), lower middle symmetric surface patches (2-2), and lower outer symmetric surface patches (2-1), **characterized in that**:
the upper-inner symmetric surface patches (1-2), the upper-middle symmetric surface patches (1-4), the upper-outer symmetric surface patches (1-1) and the lower-inner symmetric surface patches (1-3) form a surface patch array that superimposes lights to a long strip zone of a setting zone; the lower-outer symmetric surface patches (2-1) and the lower-middle symmetric surface patches (2-2) form a surface patch array that superimposes and fills lights to a transverse strip zone at a distal end of the setting zone; light emitting areas of the surface patch array for superimposing lights to the long strip zone of the setting zone and the surface patch array for superimposing and filling lights to the transverse strip zone at the distal end of the setting zone are determined according to requirements of a light intensity distribution in the distal end and proximal end of the setting zone; the LED light is arranged obliquely towards the light emitting surface of the six upper surface patches; the setting zone is a rectangular light band three-dimensional space with a set length, a set width and a set height, the set height is set to be below a cut-off line; a height of the cut-off line is set as a height of a certain part of a human body according to a humanization standard;
the long strip zone includes all zones from the proximal end to the transverse strip zone at the distal end with a height under the cut-off line and with excluding the transverse strip zone at the distal end of the setting zone.

2. The bicycle reflection cup based on surface patch according to claim 1, **characterized in that**, determining the light emitting areas of the surface patch arrays for superimposing lights to the long strip zone of the setting zone and the surface patch arrays for superimposing and filling lights to the transverse strip zone at the distal end of the setting zone according to requirements of a light intensity distribution in the distal end and proximal end of the setting zone including: when a light intensity of the transverse strip zone at the distal end of the setting zone is larger than that of the long strip zone at the proximal end of the setting zone, the light emitting area of the surface patch array for superimposing and filling lights to the transverse strip zone at the distal end of the setting zone is set to be larger than that of the surface patch array for superimposing the light to the long strip zone at the proximal end of the setting zone; when a light intensity of the transverse strip zone at the distal end of the setting zone is smaller than that of the long strip zone at the proximal end of the setting zone, the light emitting area of the surface patch array for superimposing and filling lights to the transverse strip zone at the distal end of the setting zone is set to be smaller than that of the surface patch array for superimposing the light to the long strip zone at the proximal end of the setting zone.

3. The bicycle reflection cup based on surface patch according to claim 2, **characterized in that**, the light emitting area of the surface patch array for superimposing and filling lights to the transverse strip zone at the distal end of the setting zone is 44%, and the light emitting area of the surface patch array for superimposing lights to the long strip zone of the setting zone is 56%; or the light emitting area of the surface patch array for superimposing and filling lights to the transverse strip zone at the distal end of the setting zone is 56%, and the light emitting area of the surface patch array for superimposing lights to the long strip zone at the proximal end of the setting zone is 44%.

4. The bicycle reflection cup based on surface patch according to claim 1, **characterized in that**, the surface patch array for superimposing lights to the long strip zone of the setting zone includes four groups of surface patches, in which three groups are arranged in an upper row of the reflection cup and one group is arranged in a lower row and close to middle of the reflection cup, the four groups of surface patches superimpose and emit lights from the proximal end to the distal end in the long strip zone of the setting zone; a light emitting surface of the three groups of surface patches in the upper row is 239.57 mm², an effective light emitting surface of which in the long strip zone is 52%; a light emitting surface of the one group of surface patches in a lower row and close to middle of the reflection cup is 224.16 mm², an effective light emitting surface of which in the long strip zone is 48%;
the four groups of surface patches includes:
a first group of upper-outer symmetric surface patches (1-1), an effective light emitting zone in the long strip zone thereof is a zone that has: a light emitting height under the cut-off line, a light emitting length within 55% of a total length of the setting zone extending forward from -2° to -45°; a highest light emitting zone in the long strip zone thereof is a zone that has: a light emitting height under the cut-off line, and a light emitting length within 20% of a total length of the setting zone extending forward from -2° to -45°;
a second group of upper-inner symmetric surface patches (1-2), an effective light emitting zone in the long strip zone thereof is a zone that has: a light emitting height under the cut-off line, a light emitting length within 80% of a total length of the setting zone extending forward from -8° to -65°; a highest light emitting zone in the long strip zone thereof is a zone that has: a light emitting height under the cut-off line, and a light emitting length within 30% of a total length of the setting zone extending forward from -8° to -65°;
a third group of lower-inner symmetric surface patches (1-3), an light emitting area thereof is 224.16, which is 44% of a total light emitting area of the long strip zone, an effective light emitting zone in the long strip zone thereof is a zone that has: a light emitting height under the cut-off line, a light emitting length within 44% of a total length of the setting zone extending forward from -1.5° to -47°; a highest light emitting zone in a length direction thereof is a zone that has: a light emitting height under the cut-off line, and a light emitting length within 75% of a total length of the setting zone extending forward from - 1.5° to -47°;
a fourth group of upper-middle symmetric surface patches (1-4), an effective light emitting zone in a length direction thereof is a zone that has: a light emitting height under the cut-off line, a light emitting length within 98% of a total length of the setting zone extending forward from -2.5° to -45°; a highest light emitting zone in a length direction thereof is a zone that has: a light emitting height under the cut-off line, and a light emitting length within 35% of a total length of the setting zone extending forward from -2.5° to -45°.

5. The bicycle reflection cup based on surface patch according to claim 1, **characterized in that**, the surface patch array for superimposing and filling lights to the transverse strip zone of the setting zone includes two groups of surface patches, which superimpose and fills lights in the transverse strip zone at the distal end of the setting zone from outside to inside, the two groups of surface patches includes:
a first group of lower-outer symmetric surface patches (2-1), which is used for a light emitting width and thickness of the transverse strip zone in the distal end; a light emitting area of the surface patches is 218.556, which is larger than one fourth of a total light emitting area of the reflection cup, and a light intensity distribution of a highest light intensity thereof is 1000-3162 W/m²; a light emitting angle of the lower-outer symmetric surface patches (2-1) is from 10° to -10°; an effective light emitting width of the lower-outer symmetric surface patches (2-1) is within 40% of a width of the setting zone; a maximum light intensity width of the lower-outer symmetric surface patches (2-1) is within 30% of a width of the setting zone;
a second group of lower-middle symmetric surface patches (2-2), which is used for superimposing lights to the transverse strip zone in the distal end; a light emitting area of the surface patches is 149.44, which is larger than one sixth of a total light emitting area of the reflection cup, and a light intensity distribution of a highest light intensity thereof is 1000-3162 W/m²; a light emitting angle of the lower-outer symmetric surface patches (2-1) is from 10° to -10°; an effective light emitting width of the lower-middle symmetric surface patches (2-2) is within 20% of a width of the setting zone; a maximum light intensity width of the lower-middle symmetric surface patches (2-2) is within 15% of a width of the setting zone;
light emitting heights of the above two groups are under the cut-off line.

6. The bicycle reflection cup based on surface patch according to claim 1, **characterized in that**, a light emitting effect after superposition of the surface patch arrays for superimposing lights to the long strip zone of the setting zone and the surface patch arrays for superimposing and filling lights to the transverse strip zone in the distal end of the setting zone is:
a light intensity distribution value of a highest light intensity area after the superimposition of the transverse strip zone is 3162.28-10000 W/m²; an effective light emitting area of the transverse strip zone has: a light emitting height under the cut-off line, and a light emitting width within 30% of the setting zone; a highest light intensity area of the transverse strip zone has: a light emitting height under the cut-off line, and a light emitting width within 10% of the setting zone width;
a light intensity distribution value of a highest light intensity area after the superimposition of the long strip zone is 1000-3162.28 W/m²; an effective light emitting area of the long strip zone has: a light emitting height under the cut-off line, and a light emitting width within 80% of the setting zone; a highest light intensity area of the long strip zone has: a light emitting height under the cut-off line, and a light emitting width within 60% of the setting zone width.

7. The bicycle reflection cup based on surface patch according to claim 1, **characterized in that**, a stray light zone generated at a physical junction of the six upper surface patches and the six lower surface patches is controlled to be under the cut-off line, and a stray light intensity distribution value thereof is controlled to be less than 0.01 W/m².

8. The bicycle reflection cup based on surface patch according to claim 1, **characterized in that**, the light emitting surface of the LED light being arranged obliquely towards the six upper surface patches includes: a plane of the LED light base forms an included angle of 45 degrees with a horizontal plane, and a total thickness from the light bead to the reflection cup is 9.33 mm; the 45 degrees included angle and the distance between the light bead and the reflection cup are used to ensure that a light absorption efficiency of the reflection cup is more than 86%.

## Patentansprüche

1. Fahrradreflexionsschale auf der Basis von Oberflächenfeldern, umfassend: sechs obere Oberflächenfelder, sechs untere Oberflächenfelder und ein LED-Licht und eine Lichtbasis, die auf einer Seite einer Licht emittierenden Oberfläche der sechs Oberflächenfelder befestigt sind; die sechs oberen Oberflächenfelder sind in drei Paare unterteilt, die symmetrisch auf beiden Seiten einer Achse angeordnet sind; die sechs unteren Oberflächenfelder sind in drei Paare unterteilt, die symmetrisch auf beiden Seiten der Achse angeordnet sind; die sechs oberen Oberflächenfelder sind in dieser Reihenfolge von der Mitte zu beiden Seiten angeordnet: obere-innere symmetrische Oberflächenfelder (1-2), obere-mittlere symmetrische Oberflächenfelder (1-4), obere-äußere symmetrische Oberflächenfelder (1-1); und die sechs unteren Oberflächenfelder sind in dieser Reihenfolge von der Mitte zu beiden Seiten angeordnet: untere innere symmetrische Oberflächenfelder (1-3), untere mittlere symmetrische Oberflächenfelder (2-2) und untere äußere symmetrische Oberflächenfelder (2-1), **dadurch gekennzeichnet, dass**
die oberen-inneren symmetrischen Oberflächenfelder (1-2), die oberen-mittleren symmetrischen Oberflächenfelder (1-4), die oberen-äußeren symmetrischen Oberflächenfelder (1-1) und die unteren-inneren symmetrischen Oberflächenfelder (1-3) eine Oberflächenfeldanordnung bilden, die Lichter zu einer langen Streifenzone einer Einstellzone überlagert; die unteren-äußeren symmetrischen Oberflächenfelder (2-1) und die unteren-mittleren symmetrischen Oberflächenfelder (2-2) bilden eine Oberflächenfeldanordnung, die Lichter in einer Querstreifenzone an einem distalen Ende der Einstellzone überlagert und ausfüllt; die lichtemittierenden Bereiche der Oberflächenfeldanordnung zum Überlagern von Lichtern in die lange Streifenzone der Einstellzone und der Oberflächenfeldanordnung zum Überlagern und Füllen von Lichtern in die Querstreifenzone am distalen Ende der Einstellzone werden gemäß den Anforderungen einer Lichtintensitätsverteilung im distalen Ende und proximalen Ende der Einstellzone festgelegt; das LED-Licht ist schräg in Richtung der lichtemittierenden Oberfläche der sechs oberen Oberflächenfelder angeordnet; die Einstellzone ist ein rechteckiger dreidimensionaler Lichtbandraum mit einer eingestellten Länge, einer eingestellten Breite und einer eingestellten Höhe, wobei die eingestellte Höhe so eingestellt ist, dass sie unterhalb einer Abschneidelinie liegt; eine Höhe der Abschneidelinie ist als eine Höhe eines bestimmten Teils eines menschlichen Körpers gemäß einem Humanisierungsstandard eingestellt;
die lange Streifenzone umfasst alle Zonen vom proximalen Ende bis zur Querstreifenzone am distalen Ende mit einer Höhe unterhalb der Hell-Dunkel-Grenze und mit Ausnahme der Querstreifenzone am distalen Ende der Einstellzone.

2. Fahrradreflexionsschale auf der Basis von Oberflächenfeldern nach Anspruch 1, **dadurch gekennzeichnet, dass** das Festlegen der lichtemittierenden Bereiche der Oberflächenfeldanordnung zum Überlagern von Lichtern in die lange Streifenzone der Einstellzone und der Oberflächenfeldanordnung zum Überlagern und Füllen von Lichtern in die Querstreifenzone am distalen Ende der Einstellzone gemäß Anforderungen einer Lichtintensitätsverteilung im distalen Ende und proximalen Ende der Einstellzone umfasst; wenn eine Lichtintensität der transversalen Streifenzone am distalen Ende der Einstellzone größer ist als die der langen Streifenzone am proximalen Ende der Einstellzone, wird die lichtemittierende Fläche der Oberflächenfeldanordnung zum Überlagern und Füllen von Lichtern auf die transversale Streifenzone am distalen Ende der Einstellzone so eingestellt, dass sie größer ist als die der Oberflächenfeldanordnung zum Überlagern des Lichts auf die lange Streifenzone am proximalen Ende der Einstellzone; wenn eine Lichtintensität der Querstreifenzone am distalen Ende der Einstellzone kleiner ist als die der langen Streifenzone am proximalen Ende der Einstellzone, wird die lichtemittierende Fläche der Oberflächenfeldanordnung zum Überlagern und Füllen von Lichtern mit der Querstreifenzone am distalen Ende der Einstellzone kleiner eingestellt als die der Oberflächenfeldanordnung zum Überlagern des Lichts mit der langen Streifenzone am proximalen Ende der Einstellzone.

3. Fahrradreflexionsschale auf der Basis von Oberflächenfeldern nach Anspruch 2, **dadurch gekennzeichnet, dass** die lichtemittierende Fläche der Oberflächenfeldanordnung zum Überlagern und Füllen von Licht auf die Querstreifenzone am distalen Ende der Einstellzone 44% beträgt und die lichtemittierende Fläche der Oberflächenfeldanordnung zum Überlagern von Licht auf die lange Streifenzone der Einstellzone 56% beträgt; oder dass die Licht emittierende Fläche der Oberflächenfeldanordnung zum Überlagern und Füllen von Lichtern in der Querstreifenzone am distalen Ende der Einstellzone 56% beträgt und die Licht emittierende Fläche der Oberflächenfeldanordnung zum Überlagern von Lichtern in der langen Streifenzone am proximalen Ende der Einstellzone 44% beträgt.

4. Fahrradreflexionsschale auf der Basis von Oberflächenfeldern nach Anspruch 1, **dadurch gekennzeichnet, dass** die Oberflächenfeldanordnung zum Überlagern von Lichtern in die lange Streifenzone der Einstellzone vier Gruppen von Oberflächenfeldern umfasst, wobei drei Gruppen in einer oberen Reihe der Reflexionsschale angeordnet sind und eine Gruppe in einer unteren Reihe und nahe der Mitte der Reflexionsschale angeordnet ist, wobei die vier Gruppen von Oberflächenfeldern Lichter vom proximalen Ende zum distalen Ende in der langen Streifenzone der Einstellzone überlagern und emittieren; eine lichtemittierende Oberfläche der drei Gruppen von Oberflächenfeldern in der oberen Reihe beträgt 239,57 mm², wobei die effektive Lichtaustrittsfläche in der langen Streifenzone 52% beträgt; die Lichtaustrittsfläche der einen Gruppe von Oberflächenfeldern in einer unteren Reihe und nahe der Mitte der Reflexionsschale 224,16 mm² beträgt, wobei eine effektive lichtemittierende Oberfläche davon in der langen Streifenzone 48% beträgt;
die vier Gruppen von Oberflächenfeldern umfassen:
eine erste Gruppe von oberen äußeren symmetrischen Oberflächenfeldern (1-1), wobei eine effektive lichtemittierende Zone in der langen Streifenzone davon eine Zone ist, die aufweist: eine lichtemittierende Höhe unter der Schnittlinie, eine lichtemittierende Länge innerhalb von 55% einer Gesamtlänge der Einstellzone, die sich nach vorne von -2° bis -45° erstreckt; eine höchste lichtemittierende Zone in der langen Streifenzone davon ist eine Zone, die aufweist: eine lichtemittierende Höhe unter der Schnittlinie und eine lichtemittierende Länge innerhalb von 20% einer Gesamtlänge der Einstellzone, die sich nach vorne von -2° bis -45° erstreckt, aufweist;
eine zweite Gruppe von oberen-inneren symmetrischen Oberflächenfeldern (1-2), wobei eine effektive lichtemittierende Zone in der langen Streifenzone davon eine Zone ist, die aufweist: eine lichtemittierende Höhe unter der Hell-Dunkel-Grenze, eine Lichtemissionslänge innerhalb von 80% einer Gesamtlänge der Einstellzone, die sich nach vorne von -8° bis -65° erstreckt; eine höchste lichtemittierende Zone in der langen Streifenzone davon ist eine Zone, die aufweist: eine lichtemittierende Höhe unter der Hell-Dunkel-Grenze, und eine lichtemittierende Länge innerhalb von 30% einer Gesamtlänge der Einstellzone, die sich nach vorne von -8° bis -65° erstreckt;
eine dritte Gruppe von unteren inneren symmetrischen Oberflächenfeldern (1-3), eine lichtemittierende Fläche davon ist 224,16, was 44% einer gesamten lichtemittierenden Fläche der langen Streifenzone ist, wobei eine wirksame lichtemittierende Zone in der langen Streifenzone davon eine Zone ist, die: eine lichtemittierende Höhe unter der Abschneidelinie, eine lichtemittierende Länge innerhalb von 44% einer Gesamtlänge der Einstellzone, die sich nach vorne von -1,5° bis -47° erstreckt, hat; eine höchste lichtemittierende Zone in einer Längsrichtung davon eine Zone ist, die: eine lichtemittierende Höhe unter der Abschneidelinie und eine lichtemittierende Länge innerhalb von 75% einer Gesamtlänge der Einstellzone, die sich nach vorne von -1.5° bis -47° erstreckt;
eine vierte Gruppe von oberen-mittelsymmetrischen Oberflächenfeldern (1-4), wobei eine effektive lichtemittierende Zone in einer Längsrichtung davon eine Zone ist, die aufweist: eine lichtemittierende Höhe unter der Hell-Dunkel-Grenze, eine lichtemittierende Länge innerhalb von 98% einer Gesamtlänge der Einstellzone, die sich nach vorne von -2.5° bis -45° erstreckt; eine Zone mit der höchsten Lichtemission in ihrer Längsrichtung ist eine Zone, die aufweist: eine lichtemittierende Höhe unterhalb der Grenzlinie und eine lichtemittierende Länge innerhalb von 35% der Gesamtlänge der Einstellzone, die sich von -2,5° bis -45° nach vorne erstreckt.

5. Fahrradreflexionsschale auf der Basis von Oberflächenfeldern nach Anspruch 1, **dadurch gekennzeichnet, dass** die Oberflächenfeldanordnung zum Überlagern und Füllen von Licht in der Querstreifenzone der Einstellzone zwei Gruppen von Oberflächenfeldern umfasst, die Licht in der Querstreifenzone am distalen Ende der Einstellzone von außen nach innen überlagern und füllen, wobei die zwei Gruppen von Oberflächenfeldern umfassen:
eine erste Gruppe von unten-außen-symmetrischen Oberflächenfeldern (2-1 ), die für eine lichtemittierende Breite und Dicke der transversalen Streifenzone am distalen Ende verwendet wird; eine lichtemittierende Fläche der Oberflächenfelder beträgt 218,556, was größer ist als ein Viertel der gesamten lichtemittierenden Fläche der Reflexionsschale, und eine Lichtintensitätsverteilung einer höchsten Lichtintensität davon ist 1.000-3.162 W/m²; ein Lichtemissionswinkel der unteren äußeren symmetrischen Oberflächenfelder (2-1) beträgt 10° bis -10°; eine effektive lichtemittierende Breite der unteren äußeren symmetrischen Oberflächenfelder (2-1) ist innerhalb von 40% einer Breite der Einstellzone; eine maximale Lichtintensitätsbreite der unteren-äußeren symmetrischen Oberflächenfelder (2-1) liegt innerhalb von 30% einer Breite der Einstellzone;
eine zweite Gruppe von unteren-mittleren symmetrischen Oberflächenfeldern (2-2), die zum Überlagern von Lichtern zu der transversalen Streifenzone in dem distalen Ende verwendet wird; eine lichtemittierenden Fläche der Oberflächenfelder beträgt 149,44, was größer ist als ein Sechstel der gesamten lichtemittierenden Fläche der Reflexionsschale, und eine Lichtintensitätsverteilung einer höchsten Lichtintensität davon beträgt 1.000 - 3.162 W/m²; ein lichtemittierender Winkel der unteren-äußeren symmetrischen Oberflächenfelder (2-1) beträgt von 10° bis -10°; eine effektive lichtemittierende Breite der unteren mittleren symmetrischen Oberflächenfelder (2-2) liegt innerhalb von 20% einer Breite der Einstellzone; eine maximale Lichtintensitätsbreite der unteren mittleren symmetrischen Oberflächenfelder (2-2) liegt innerhalb von 15% einer Breite der Einstellzone;
Lichtemissionshöhen der obigen zwei Gruppen liegen unter der Grenzlinie.

6. Fahrradreflexionsschale auf der Basis von Oberflächenfeldern nach Anspruch 1, **dadurch gekennzeichnet, dass** ein Lichtemissionseffekt nach Überlagerung der Oberflächenfeldanordnungen zum Überlagern von Lichtern auf die lange Streifenzone der Einstellzone und der Oberflächenfeldanordnungen zum Überlagern und Füllen von Lichtern auf die Querstreifenzone im distalen Ende der Einstellzone folgender ist:
ein Lichtintensitätsverteilungswert eines Bereichs mit der höchsten Lichtintensität nach der Überlagerung der Querstreifenzone ist 3.162,28 - 10.000 W/m²; eine wirksame Lichtabgabefläche der Querstreifenzone hat: eine Lichtabgabehöhe unter der Hell-Dunkel-Grenze und eine Lichtabgabebreite innerhalb von 30% der Einstellzone; eine höchste Lichtabgabefläche der Querstreifenzone hat: eine Lichtabgabehöhe unter der Hell-Dunkel-Grenze und eine Lichtabgabebreite innerhalb von 10% der Einstellzonenbreite;
ein Lichtabgabeverteilungswert einer höchsten Lichtabgabefläche nach der Überlagerung der langen Streifenzone beträgt 1.000 - 3.162,28 W/m²; eine wirksame Lichtabgabefläche der langen Streifenzone hat: eine Lichtabstrahlungshöhe unter der Abschneidelinie und eine Lichtabstrahlungsbreite innerhalb von 80% der Einstellzonenbreite; ein Bereich höchster Lichtintensität der langen Streifenzone hat: eine Lichtabstrahlungshöhe unter der Abschneidelinie und eine Lichtabstrahlungsbreite innerhalb von 60% der Einstellzonenbreite.

7. Fahrradreflexionsschale auf der Basis von Oberflächenfeldern nach Anspruch 1, **dadurch gekennzeichnet, dass** eine Streulichtzone, die an einer physikalischen Verbindung der sechs oberen Oberflächenfelder und der sechs unteren Oberflächenfelder erzeugt wird, so gesteuert wird, dass sie unter der Grenzlinie liegt, und ein Streulichtintensitätsverteilungswert davon so gesteuert wird, dass er weniger als 0,01 W/m² beträgt.

8. Fahrradreflexionsschale auf der Basis von Oberflächenfeldern nach Anspruch 1, **dadurch gekennzeichnet, dass** die lichtemittierende Oberfläche des LED-Lichts, die schräg zu den sechs oberen Oberflächenfeldern angeordnet ist, Folgendes umfasst: eine Ebene der LED-Lichtbasis bildet einen eingeschlossenen Winkel von 45 Grad mit einer horizontalen Ebene, und eine Gesamtdicke von der Lichtperle bis zur Reflexionsschale beträgt 9,33 mm; der eingeschlossene Winkel von 45 Grad und der Abstand zwischen der Lichtperle und der Reflexionsschale werden verwendet, um sicherzustellen, dass ein Lichtabsorptionswirkungsgrad der Reflexionsschale mehr als 86 % beträgt.

## Revendications

1. Coupelle de réflexion pour bicyclette sur la base de carreaux de surfaces, comprenant : six carreaux de surfaces supérieurs, six carreaux de surfaces inférieurs, et une lumière LED et une base de lumière qui sont fixées sur un côté d'une surface d'émission de lumière des six carreaux de surfaces ; les six carreaux de surfaces supérieurs sont divisés en trois paires qui sont disposées symétriquement sur les deux côtés d'un axe ; les six carreaux de surfaces inférieurs sont divisés en trois paires qui sont disposées symétriquement sur les deux côtés de l'axe ; les six carreaux de surfaces supérieurs sont disposés dans un ordre allant du milieu aux deux côtés : carreaux de surfaces symétriques supérieurs-intérieurs (1-2), carreaux de surfaces symétriques supérieurs-centraux (1-4), carreaux de surfaces symétriques supérieurs-extérieurs (1-1) ; et les six carreaux de surfaces inférieurs sont disposés dans un ordre allant du milieu aux deux côtés : carreaux de surfaces symétriques inférieurs intérieurs (1-3), carreaux de surfaces symétriques inférieurs centraux (2-2), et carreaux de surfaces symétriques inférieurs extérieurs (2-1), **caractérisée en ce que** :
les carreaux de surfaces symétriques supérieurs-intérieurs (1-2), les carreaux de surfaces symétriques supérieurs-centraux (1-4), les carreaux de surfaces symétriques supérieurs-extérieurs (1-1) et les carreaux de surfaces symétriques inférieurs-intérieurs (1-3) forment un réseau de carreaux de surfaces qui superpose des lumières à une zone de bande longue d'une zone de réglage ; les carreaux de surfaces symétriques inférieurs-extérieurs (2-1) et les carreaux de surfaces symétriques inférieurs-centraux (2-2) forment un réseau de carreaux de surfaces qui superpose et remplit de lumières une zone de bande transversale à une extrémité distale de la zone de réglage ; des zones d'émission de lumière du réseau de carreaux de surfaces pour la superposition de lumières à la zone de bande longue de la zone de réglage et le réseau de carreaux de surfaces pour la superposition et le remplissage de lumières à la zone de bande transversale à l'extrémité distale de la zone de réglage sont déterminés en fonction des exigences d'une distribution d'intensité lumineuse dans l'extrémité distale et l'extrémité proximale de la zone de réglage ; la lumière LED est disposée obliquement vers la surface d'émission de lumière des six carreaux de surfaces supérieurs ; la zone de réglage est un espace tridimensionnel rectangulaire à bande lumineuse ayant une longueur définie, une largeur définie et une hauteur définie, la hauteur définie étant en dessous d'une ligne de coupure ; une hauteur de la ligne de coupure est définie en tant que hauteur d'une certaine partie d'un corps humain conformément à une norme d'humanisation ;
la zone de bande longue comprend toutes les zones allant de l'extrémité proximale à la zone de bande transversale à l'extrémité distale ayant une hauteur en dessous de la ligne de coupure et excluant la zone de bande transversale à l'extrémité distale de la zone de réglage.

2. Coupelle de réflexion pour bicyclette sur la base de carreaux de surfaces selon la revendication 1, **caractérisée en ce que** la détermination des zones d'émission de lumière des réseaux de carreaux de surfaces pour la superposition de lumières à la zone de bande longue de la zone de réglage et les réseaux de carreaux de surfaces pour la superposition et le remplissage de lumières à la zone de bande transversale à l'extrémité distale de la zone de réglage en fonction des exigences d'une distribution d'intensité lumineuse dans l'extrémité distale et l'extrémité proximale de la zone de réglage comprenant : lorsqu'une intensité lumineuse de la zone de bande transversale à l'extrémité distale de la zone de réglage est supérieure à celle de la zone de bande longue à l'extrémité proximale de la zone de réglage, la zone d'émission de lumière du réseau de carreaux de surfaces pour la superposition et le remplissage de lumières à la zone de bande transversale à l'extrémité distale de la zone de réglage est réglée pour être supérieure à celle du réseau de carreaux de surfaces pour la superposition de lumière à la zone de bande longue à l'extrémité proximale de la zone de réglage ; lorsqu'une intensité lumineuse de la zone de bande transversale à l'extrémité distale de la zone de réglage est inférieure à celle de la zone de bande longue à l'extrémité proximale de la zone de réglage, la zone d'émission de lumière du réseau de carreaux de surfaces pour la superposition et le remplissage de lumières à la zone de bande transversale à l'extrémité distale de la zone de réglage est réglée pour être inférieure à celle du réseau de carreaux de surfaces pour la superposition de lumière à la zone de bande longue à l'extrémité proximale de la zone de réglage.

3. Coupelle de réflexion pour bicyclette sur la base de carreaux de surfaces selon la revendication 2, **caractérisée en ce que** la zone d'émission de lumière du réseau de carreaux de surfaces pour la superposition et le remplissage de lumières à la zone de bande transversale à l'extrémité distale de la zone de réglage est de 44 %, et la zone d'émission de lumière du réseau de carreaux de surfaces pour la superposition de lumières à la zone de bande longue de la zone de réglage est de 56 %; ou la zone d'émission de lumière du réseau de carreaux de surfaces pour la superposition et le remplissage de lumières à la zone de bande transversale à l'extrémité distale de la zone de réglage est de 56 %, et la zone d'émission de lumière du réseau de carreaux de surfaces pour la superposition de lumières à la zone de bande longue à l'extrémité proximale de la zone de réglage est de 44 %.

4. Coupelle de réflexion pour bicyclette sur la base de carreaux de surfaces selon la revendication 1, **caractérisée en ce que** le réseau de carreaux de surfaces pour la superposition de lumières à la zone de bande longue de la zone de réglage comprend quatre groupes de carreaux de surfaces, dans lesquels trois groupes sont disposés dans une rangée supérieure de la coupelle de réflexion et un groupe est disposé dans une rangée inférieure et proche du centre de la coupelle de réflexion, les quatre groupes des carreaux de surfaces superposent et émettent des lumières de l'extrémité proximale à l'extrémité distale dans la zone de bande longue de la zone de réglage ; une surface émettrice de lumière des trois groupes de carreaux de surfaces dans la rangée supérieure est de 239,57 mm², une surface émettrice de lumière effective dont la zone de bande longue est de 52 %; une surface émettrice de lumière d'un groupe de carreaux de surfaces dans une rangée inférieure et proche du centre de la coupelle de réflexion est de 224,16 mm², une surface émettrice de lumière effective dont la zone de bande longue est de 48 %;
les quatre groupes de carreaux de surfaces comprennent :
un premier groupe de carreaux de surfaces symétriques supérieurs-extérieurs (1-1), une zone d'émission de lumière effective dans sa zone de bande longue est une zone qui a : une hauteur d'émission de lumière en dessous de la ligne de coupure, une longueur d'émission de lumière comprise dans 55 % d'une longueur totale de la zone de réglage s'étendant vers l'avant de -2° à -45° ; une zone d'émission de lumière maximale dans sa zone de bande longue est une zone qui a : une hauteur d'émission de lumière en dessous de la ligne de coupure, et une longueur d'émission de lumière comprise dans 20 % d'une longueur totale de la zone de réglage s'étendant vers l'avant de -2° à -45° ;
un deuxième groupe de carreaux de surfaces symétriques supérieurs-intérieurs (1-2), une zone d'émission de lumière effective dans sa zone de bande longue est une zone qui a : une hauteur d'émission de lumière en dessous de la ligne de coupure, une longueur d'émission de lumière comprise dans 80 % d'une longueur totale de la zone de réglage s'étendant vers l'avant de -8° à -65° ; une zone d'émission de lumière maximale dans sa zone de bande longue est une zone qui a : une hauteur d'émission de lumière en dessous de la ligne de coupure, et une longueur d'émission de lumière comprise dans 30 % d'une longueur totale de la zone de réglage s'étendant vers l'avant de -8° à -65° ;
un troisième groupe de carreaux de surfaces symétriques inférieurs-intérieurs (1-3), une zone d'émission de lumière de celui-ci est de 224,16, soit 44 % d'une zone d'émission de lumière totale de la zone de bande longue, une zone d'émission de lumière effective dans sa zone de bande longue est une zone qui a : une hauteur d'émission de lumière en dessous de la ligne de coupure, une longueur d'émission de lumière comprise dans 44 % d'une longueur totale de la zone de réglage s'étendant vers l'avant de -1,5° à -47° ; une zone d'émission de lumière maximale dans le sens de sa longueur est une zone qui a : une hauteur d'émission de lumière en dessous de la ligne de coupure, et une longueur d'émission de lumière comprise dans 75 % d'une longueur totale de la zone de réglage s'étendant vers l'avant de -1,5° à -47° ;
un quatrième groupe de carreaux de surfaces symétriques supérieurs-centraux (1-4), une zone d'émission de lumière effective dans le sens de sa longueur est une zone qui a : une hauteur d'émission de lumière en dessous de la ligne de coupure, une longueur d'émission de lumière comprise dans 98 % d'une longueur totale de la zone de réglage s'étendant vers l'avant de -2,5° à -45° ; une zone d'émission de lumière maximale dans le sens de sa longueur est une zone qui a : une hauteur d'émission de lumière en dessous de la ligne de coupure, et une longueur d'émission de lumière comprise dans 35 % d'une longueur totale de la zone de réglage s'étendant vers l'avant de -2,5° à -45°.

5. Coupelle de réflexion pour bicyclette sur la base de carreaux de surfaces selon la revendication 1, **caractérisée en ce que** le réseau de carreaux de surfaces pour la superposition et le remplissage de lumières à la zone de bande transversale de la zone de réglage comprend deux groupes de carreaux de surfaces, qui superposent et remplissent de lumières la zone de bande transversale à l'extrémité distale de la zone de réglage de l'extérieur vers l'intérieur, les deux groupes de carreaux de surfaces comprennent :
un premier groupe de carreaux de surfaces symétriques inférieurs-extérieurs (2-1), qui est utilisé pour une largeur d'émission de lumière et une épaisseur de la zone de bande transversale dans l'extrémité distale ; une zone d'émission de lumière des carreaux de surfaces est de 218,556, ce qui représente plus d'un quart d'une zone d'émission de lumière totale de la coupelle de réflexion, et une distribution d'intensité lumineuse d'une intensité lumineuse maximale de celle-ci est de 1000 à 3162 W/m² ; un angle d'émission de lumière des carreaux de surfaces symétriques inférieurs-extérieurs (2-1) est de 10 à -10° ; une largeur d'émission de lumière effective des carreaux de surfaces symétriques inférieurs-extérieurs (2-1) est comprise dans 40 % d'une largeur de la zone de réglage ; une largeur d'intensité lumineuse maximale des carreaux de surfaces symétriques inférieurs-extérieurs (2-1) est comprise dans 30 % d'une largeur de la zone de réglage ;
un deuxième groupe de carreaux de surfaces symétriques inférieurs-centraux (2-2), qui est utilisé pour la superposition de lumières à la zone de bande transversale dans l'extrémité distale ; une zone d'émission de lumière des carreaux de surfaces est de 149,44, ce qui représente plus d'un sixième d'une zone d'émission de lumière totale de la coupelle de réflexion, et une distribution d'intensité lumineuse d'une intensité lumineuse maximale de celle-ci est de 1000 à 3162 W/m²; un angle d'émission de lumière des carreaux de surfaces symétriques inférieurs-extérieurs (2-1) est de 10° à -10° ; une largeur d'émission de lumière effective des carreaux de surfaces symétriques inférieurs-centraux (2-2) est comprise dans 20 % d'une largeur de la zone de réglage ; une largeur d'intensité lumineuse maximale des carreaux de surfaces symétriques inférieurs-centraux (2-2) est comprise dans 15 % d'une largeur de la zone de réglage ;
les hauteurs d'émission de lumière des deux groupes mentionnés ci-dessus sont en dessous de la ligne de coupure.

6. Coupelle de réflexion pour bicyclette sur la base de carreaux de surfaces selon la revendication 1, **caractérisée en ce qu'**un effet d'émission de lumière après superposition des réseaux de carreaux de surfaces pour la superposition de lumières à la zone de bande longue de la zone de réglage et les réseaux de carreaux de surfaces pour la superposition et le remplissage de lumières à la zone de bande transversale dans l'extrémité distale de la zone de réglage est :
une valeur de distribution d'intensité lumineuse de la zone d'intensité lumineuse maximale après la superposition de la zone de bande transversale est de 3162,28 à 10 000 W/m² ; une zone d'émission de lumière effective de la zone de bande transversale a : une hauteur d'émission de lumière en dessous de la ligne de coupure, et une largeur d'émission de lumière comprise dans 30 % de la zone de réglage ; une zone d'intensité lumineuse maximale de la zone de bande transversale a : une hauteur d'émission de lumière en dessous de la ligne de coupure, et une largeur d'émission de lumière comprise dans 10 % de la largeur de zone de réglage ;
une valeur de distribution d'intensité lumineuse d'une zone d'intensité lumineuse maximale après la superposition de la zone de bande longue est de 1000 à 3162,28 W/m² ; une zone d'émission de lumière effective de la zone de bande longue a : une hauteur d'émission de lumière en dessous de la ligne de coupure, et une largeur d'émission de lumière comprise dans 80 % de la zone de réglage ; une zone d'intensité lumineuse maximale de la zone de bande longue a : une hauteur d'émission de lumière en dessous de la ligne de coupure, et une largeur d'émission de lumière comprise dans 60 % de la largeur de zone de réglage.

7. Coupelle de réflexion pour bicyclette sur la base de carreaux de surfaces selon la revendication 1, **caractérisée en ce qu'**une zone de lumière parasite générée à une jonction physique des six carreaux de surfaces supérieurs et des six carreaux de surfaces inférieurs est contrôlée pour être en dessous de la ligne de coupure, et une valeur de distribution d'intensité lumineuse parasite de celle-ci est contrôlée pour être inférieure à 0,01 W/m².

8. Coupelle de réflexion pour bicyclette sur la base de carreaux de surfaces selon la revendication 1, **caractérisée en ce que** la surface d'émission de lumière de la lumière LED disposée obliquement vers les six carreaux de surfaces supérieurs comprend : un plan de la base de lumière LED forme un angle d'ouverture de 45 degrés avec un plan horizontal, et une épaisseur totale de la perle de lumière à la coupelle de réflexion est de 9,33 mm ; l'angle d'ouverture de 45 degrés et la distance entre la perle de lumière et la coupelle de réflexion sont utilisés pour garantir que l'efficacité d'absorption de lumière de la coupelle de réflexion est supérieure à 86 %.
